## Europäisches Patentamt

## European Patent Office

## Office européen des brevets

(11) Numéro de publication: **0 023 446**
**B1**

(12) **FASCICULE DE BREVET EUROPEEN**

(45) Date de publication du fascicule du brevet: **12.09.84**

(21) Numéro de dépôt: **80401073.4**

(22) Date de dépôt: **18.07.80**

(51) Int. Cl.³: **F 16 L 3/10, F 16 L 41/08**

(54) Dispositif de point fixe entre une tuyauterie et un support.

(30) Priorité: **25.07.79 FR 7919169**

(43) Date de publication de la demande:
**04.02.81 Bulletin 81/05**

(45) Mention de la délivrance du brevet:
**12.09.84 Bulletin 84/37**

(84) Etats contractants désignés:
**BE DE GB IT**

(56) Documents cités:
**DE-C- 670 390**
**FR-A-2 300 287**
**FR-A-2 301 764**
**FR-A-2 317 583**
**FR-A-2 317 736**
**FR-A-2 327 477**
**US-A-2 826 436**
**US-A-3 254 399**

(73) Titulaire: **Framatome**
**Tour Fiat 1 place de la Coupole**
**F-92400 Courbevoie (FR)**

(72) Inventeur: **Bot, Jean-Yves**
**29 Avenue Foch**
**F-94120 Fontenay-Sous-Bois (FR)**

(74) Mandataire: **Dupuy, Louis et al**
**CREUSOT-LOIRE 15 rue Pasquier**
**F-75383 Paris Cedex 8 (FR)**

Courier Press, Leamington Spa, England.

## Description

La présente invention a pour objet un dispositif de liaison du type point fixe entre un élément de tuyauterie et un support, capable de reprendre les efforts appliqués à la tuyauterie dans toutes les directions, en fonctionnement normal et en conditions accidentelles.

Ce dispositif est destiné à des tuyauteries sur lesquelles on veut réaliser des points fixes par rapport à des structures résistantes, notamment dans une installation de centrale nucléaire.

Dans les centrales nucléaires à eau légère, il existe différents circuits véhiculant des fluides en pression et en température. Les conditions de sûreté imposent que ces circuits convervent l'intégrité de leur fonction vis-à-vis d'eux et vis-à-vis des ruines qu'ils peuvent provoquer aux installations voisines. Cette intégrité de fonction doit être assurée pour les conditions normales de fonctionnement mais aussi pour des conditions accidentelles.

D'une façon générale les liaisons par soudure d'éléments de support sur les tuyauteries génèrent des contraintes résiduelles qui se cumulent avec celles dues à la pression interne, aux dilatations et aux efforts accidentels. L'élimination de telles liaisons est souhaitable d'autant que leur inspection en service obligatoire amène une servitude supplémentaire.

On connaît différents types de liaisons, du type point fixe, entre une tuyauterie et un support. Un dispositif courant comporte une pièce intémédiaire soudée à la paroi de la tuyauterie et fixée par soudure ou boulonnage à une structure de support capable de reprendre les efforts.

Un autre dispositif comporte un collier un U qui ceinture la tuyauterie et qui est fixé à un étrier solidaire de la structure de support. Des blocs soudés à la tuyauterie, de part et d'autre du collier, assurent l'immobilisation de la tuyauterie.

D'autres dispositifs qui sont décrits par exemple dans le brevet français 2.300.287 et dans le brevet français 2.301.764 comprennent un fourreau ou un double fourreau annulaire qui entoure la tuyauterie. Ce fourreau est lié à la tuyauterie par une couronne soudée et il est ancré dans la paroi traversée par la tuyauterie. Ce dispositif assure l'ancrage dans la paroi ainsi que l'isolation thermique.

D'autres dispositifs tels que celui décrit dans le brevet français 2.317.736 comportent une couronne conique entourant la tuyauterie à laquelle elle est fixée par l'intermédiaire d'une pièce renforcée de la tuyauterie. Cette couronne est fixée à sa périphérie extérieure à une structure de support. Cette conception tolère de faibles écarts angulaires de la tuyauterie.

Un autre dispositif de point fixe pour tuyauterie est représenté dans le brevet français 2.327.477. Il comprend un disque qui entoure la tuyauterie à laquelle il est soudé et qui est logé dans une couronne creuse fixée à la structure de support.

Le dispositif que décrit le brevet US 3.254.399 comprend un manchon ayant un collet avec une portée prismatique engagée dans un logement prismatique, l'immobilisation axiale étant assurée par un écrou. Ce manchon, dans la zone comprise entre le collet et l'écrou, est soumis à des efforts et des contraintes. Les dispositifs connus ne permettent pas de reprendre tous les efforts.

La présente invention a pour objet un dispositif reliant en point fixe, un manchon de la tuyauterie à un support et permettant de reprendre tous les efforts axiaux et latéraux sans liaison soudée entre la tuyauterie et le support et sans introduire de contraintes dans le manchon. Le niveau des contraintes dans les soudures pratiquées par ailleurs sur la tuyauterie est peu élevé. L'inspection des soudures sur la tuyauterie peut être faite facilement et rapidement.

Le dispositif selon l'invention assure un point fixe entre une tuyauterie et un bâti, la tuyauterie présentant entre deux tronçons, un manchon qui comporte une portée prismatique comportant au moins deux facettes parallèles à l'axe de la tuyauterie et deux épaulements formant deux portées annulaires, le bâti ancré à une structure comportant un logement prismatique présentant des facettes parallèles à l'axe de la tuyauterie, en nombre égal à celui des facettes de ladite portée prismatique, ladite portée prismatique étant engagée avec un faible jeu dans ledit logement, une première face d'appui plane contre laquelle s'appuie une première portée annulaire du manchon et une seconde face d'appui plane opposée à ladite première face d'appui, ledit dispositif est caractérisé par le fait que le manchon qui est soudé à la tuyauterie comporte une seconde portée prismatique présentant au moins deux facettes parallèles à l'axe de la tuyauterie et disposée de manière que les portées prismatiques soient de part et d'autre des portées annulaires (41, 42) qui limitent une partie de forte épaisseur, ladite seconde portée prismatique étant engagée avec un faible jeu dans un second logement prismatique du bâti présentant des facettes parallèles à l'axe de la tuyauterie, en nombre égal à celui des facettes de ladite seconde portée prismatique, ladite seconde portée annulaire du manchon s'appuyant contre ladite seconde face d'appui plane du bâti.

L'invention va maintenant être décrite avec plus de détails en se référant à un mode de réalisation donné à titre d'exemple et représenté par les dessins annexés.

La figure 1 est une vue en coupe, selon l'axe de la tuyauterie, du dispositif de liaison selon l'invention.

La figure 2 est une vue de gauche de la figure 1.

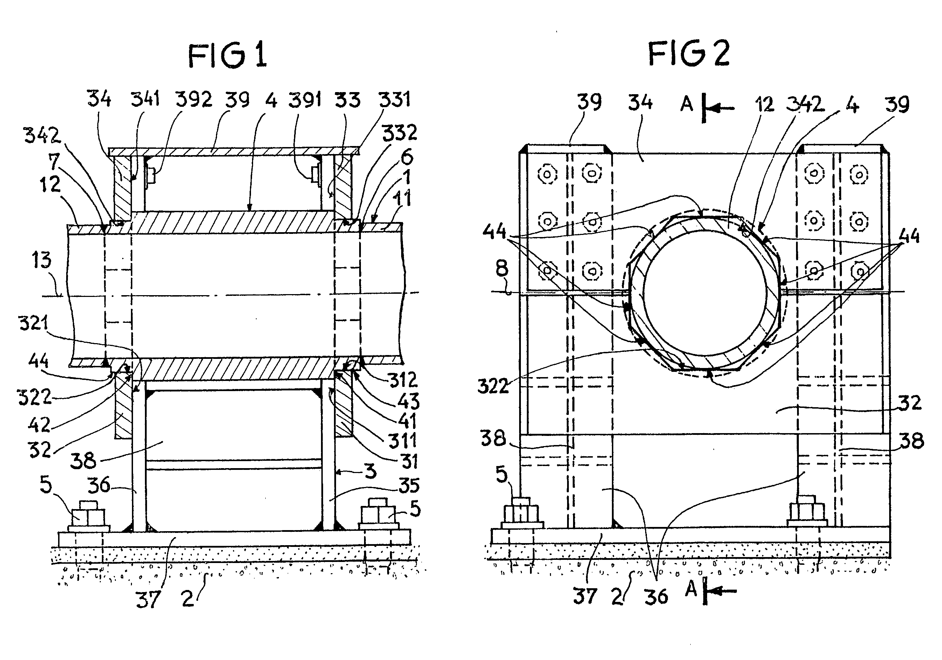

Le dispositif représenté sur les figures 1 et 2 maintient la tuyauterie 1 sur une structure 2 qui est par exemple un massif en béton. La liaison est assurée par un bâti 3 de type mécano-soudé dont la semelle 37 est dotée d'un relief permettant un bon accrochage sur le béton. Ce bâti est ancré au support 2 par des boulons d'ancrage 5.

Un manchon rigide 4, annulaire et creux, est monté coaxialement entre les tronçons 11 et 12 de la tuyauterie de manière à canaliser le fluide entre ces deux tronçons. Il est soudé à ces deux tronçons par des soudures annulaires 6 et 7.

Le manchon 4 comporte deux épaulements qui forment deux portées annulaires 41 et 42. Ces deux portées sont planes et perpendiculaires à l'axe 13 de la tuyauterie. Il comporte par ailleurs des portées prismatiques qui sont espacées selon l'axe 13. Chacune des portées prismatiques est constituée par au moins deux facettes 43 ou 44 qui sont planes et parallèles à l'axe 13 de la tuyauterie. Elles sont disposées à égale distance de l'axe 13 de manière à former en section droite (section perpendiculaire à l'axe de la tuyauterie) un polygone régulier. Les portées prismatiques 43 et 44 sont adjacentes respectivement aux portées annulaires planes 41 et 42. De préférence, les portées prismatiques 43 et 44 sont disposées de part et d'autre des portées planes et annulaires 41 et 42 et limitent une longueur de forte épaisseur du manchon.

Le bâti 3 comprend deux flasques 31 et 32 qui sont montés perpendiculairement à l'axe 13 de la tuyauterie. Ils sont fixés respectivement sur des ailes 35 et 36 qui sont soudées à la semelle 37. Ces ailes sont réunies par des âmes de renforcement 38 et par deux plaques de couvercle 39. Le bâti comprend par ailleurs deux flasques amovibles 33 et 34 qui sont montés perpendiculairement à l'axe 13.

Les flasques 31 et 33 sont associés de manière à former respectivement des faces d'appui 311 et 331 qui sont situées dans un même plan perpendiculaire à l'axe 13. De même les flasques 32 et 34 sont associés de manière à former respectivement des faces d'appui 321 et 341 qui sont situées dans un même plan perpendiculaire à l'axe 13. Les faces d'appui opposées 311—331 d'une part et 321—341 d'autre part sont appliquées respectivement contre les portées annulaires planes opposées 41 et 42 du manchon. Les deux flasques associés 31 et 33 forment un logement prismatique constitué par des facettes planes 312 et 332. Ces facettes planes ménagées sur les flasques 31 et 33 sont parallèles à l'axe 13 de la tuyauterie. Elles sont disposées, en nombre égal à celui des facettes 43 de manière à former, en section droite, un polygone régulier. De même les deux flasques associés 32 et 34 forment un logement prismatique constitué par des facettes planes 322 et 342. Ces facettes planes ménagées dans les flasques 32 et 34 sont parallèles à l'axe 13 de la tuyauterie. Elles sont disposées, en nombre égal à celui des facettes 44, de manière à former, en section droite, un polygone régulier. Chaque flasque forme une moitié d'un logement prismatique.

La portée prismatique du manchon formée par les facettes 43 est engagée, avec un faible jeu, dans le logement formé par les facettes 312 et 332 des flasques 31 et 33. De même la portée prismatique du manchon formée par les facettes 44 est engagée, avec un faible jeu, dans le logement formé par les facettes 322 et 342 des flasques 32 et 34.

Chaque portée prismatique du manchon comporte deux facettes 43 ou 44 disposées perpendiculairement à la séparation 8 entre les flasques 31 et 33 ou entre les flasques 32 et 34. Chacune de ces facettes fait face à deux demi-facettes ménagées dans deux flasques associés. De préférence, chaque portée prismatique 43 ou 44 et chaque logement prismatique 312—332 ou 322—342 sont formés de huit facettes de manière à former en section droite un octogone.

Le bâti comprenant les flasques 31 et 32 est fixé initialement sur la structure résistante en béton 2. Le manchon 4 dont la longueur est très légèrement inférieure à la distance entre les flasques 31 et 32 est introduit entre ceux-ci. Les flasques 33 et 34 sont ensuite assemblés aus ailes 35 et 36 de manière rigide et démontable par des boulons 391 et 392. Les flasques associés entourent avec un faible jeu (nécessaire pour la dilatation), les portées prismatiques usinées dans le manchon. Si le démontage n'est pas nécessaire, les flasques 33 et 34 peuvent être fixés par soudure. Tous les efforts (et notamment la torsion) sont transmis de la tuyauterie au bâti 3, puis à la structure 2.

Il est bien entendu que l'on peut sans sortir du cadre de l'invention imaginer des variantes et perfectionnements de détails et de même envisager l'emploi de moyens équivalents.

**Revendications**

1. Dispositif de point fixe entre une tuyauterie (1) et un bâti (3) dans lequel ladite tuyauterie présente, entre deux tronçons, un manchon (4) qui comporte une portée prismatique présentant au moins deux facettes (43) parallèles à l'axe (13) de la tuyauterie et deux épaulements formant deux portées annulaires (41, 42) et dans lequel le bâti (3) ancré à une structure (2) comporte un logement prismatique présentant des facettes (312, 332) parallèles à l'axe (13) de la tuyauterie, en nombre égal à celui des facettes de ladite portée prismatique, ladite portée prismatique étant engagée avec un faible jeu dans ledit logement, une première face d'appui plane (311, 331) contre laquelle s'appuie une première portée annulaire (41) du manchon et une seconde face d'appui plane (321, 341) opposée à ladite première face d'appui, caractérisé par le fait que le manchon (4) qui est soudé à la tuyauterie comporte une seconde portée prismatique présentant au moins deux facettes (44) parallèles à l'axe (13) de la tuyauterie et disposée de manière que les portées prismatiques (43, 44) soient de part et d'autre des portées annulaires (41, 42) qui limitent une partie de forte épaisseur, ladite seconde portée prismatique (44) étant engagée avec un faible jeu dans un second logement prismatique du bâti présentant des facettes (322, 342) parallèles à l'axe (13) de la tuyauterie, en nombre égal à celui des facettes de ladite seconde portée prismatique, ladite seconde portée annulaire (42) du manchon s'appuyant contre ladite seconde face d'appui plane (321, 341) du bâti (3).

2. Dispositif selon la revendication 1, caractérisé par le fait que chaque portée prismatique (43 ou 44) et chaque logement prismatique (312, 332 ou 322, 342) associé comportent huit facettes.

3. Dispositif selon l'une quelconque des revendications précédentes, caractérisé par le fait que chaque logement prismatique (312, 332 ou 322, 342) du bâti (3) est formé par deux pièces (31, 33 ou 32, 34) susceptibles d'être assemblées l'une à l'autre de manière rigide et démontable et formant chacune une moitié de ce logement.

## Patentansprüche

1. Festpunktanordnung zwischen einer Rohrleitung (1) und einem Ständer (3), bei welcher die Rohrleitung zwischen zwei Abschnitte eine Muffe (4) mit einer prismatischen Auflage aufweist die mindestens zwei zur Rohrleitungsachse (13) parallele Flächen (43) und zwei Bunde umfaßt, die zwei kreisförmige Lagerflächen (41, 42) bilden, und bei welcher der in einer Konstruktion (2) verankerte Ständer (3) eine prismatische Aufnahme mit zwei zur Rohrleitungsachse (13) parallele Flächen (312, 332) aufweist, deren Anzahl gleich der Anzahl der Flächen dieser prismatischen Auflage entspricht, wobei diese prismatische Auflage sich auf dieser Aufnahme mit geringem Spiel abstützt, sowie eine erste flache Lagerfläche (311, 331) zur Abstützung einer ersten kreisförmigen Auflage (411) der Muffe und eine dieser ersten Lagerfläche entgegengesetzte zweite flache Lagerfläche (321, 341), dadurch gekennzeichnet, daß die an die Rohrleitung angeschweisste Muffe (4) eine zweite prismatische Auflage mit mindestens zwei zur Rohrleitungsachse (13) parallele Flächen (44) aufweist und derart angeordnet ist, daß die prismatischen Auflagen (43, 44) an beiden Seiten der kreisförmigen Auflagen (41, 42) liegen, die ein dickwandiges Teil begrenzen, wobei sich diese zweite prismatische Auflage (44) mit geringem Spiel an einer zweiten prismatischen Aufnahme des Ständers abstützt, die zur Rohrleitungsachse (13) parallele Flächen (322, 342) aufweist, deren Anzahl gleich der Anzahl der Flächen dieser zweiten prismatischen Auflage entspricht, wobei diese zweite kreisförmige Auflage (42) der Muffe sich an dieser zweiten Lagerfläche (321, 341) des Ständers (3) abstützt.

2. Anordnung nach Anspruch 1, dadurch gekennzeichnet, daß jede prismatische Auflage (43 bzw. 44) und jede zugehörige prismatische Aufnahme (312, 332 bzw. 322, 342) acht Flächen aufweisen.

3. Anordnung nach einem der vorhergehenden Ansprüche, dadurch gekennzeichnet, daß jede prismatische Aufnahme (312, 332 bzw. 322, 342) des Ständers (3) aus zwei Teilen (31, 33 bzw. 32, 34) besteht, die starr miteinander verbunden und von einander gelöst werden können und jeweils eine Hälfte dieser Aufnahme bilden.

## Claims

1. A fixed point device between a pipeline (1) and a supporting frame (3) in which the said pipeline has, between two sections, a sleeve (4) which comprises a prismatic bearing having at least two facets (43) parallel to the axis (13) of the pipeline and two shoulders forming two annular bearings (41, 42) and in which the supporting frame (3), which is anchored to a structure (2), comprises a prismatic housing having facets (312, 332) parallel to the axis (13) of the pipeline, equal in number to the facets of the said prismatic bearing, the said prismatic bearing being engaged with a little play in the said housing, a first flat bearing face (311, 331) against which bears a first annular bearing (41) of the sleeve and a second flat bearing face (321, 341) opposite the said first bearing face, characterised in that the sleeve (4) welded to the pipeline comprises a second prismatic bearing which has at least two facets (44) parallel to the axis (13) of the pipeline and which is arranged so that the prismatic bearings (43, 44) are on either side of the annular bearings (41, 42) which bound a very thick part, the said second prismatic bearing (44) being engaged with a little play in a second prismatic housing of the supporting frame having facets (322, 342) parallel to the axis (13) of the pipeline, equal in number to the facets of the said second prismatic bearing, the said second annular bearing (42) of the sleeve bearing against the said second flat bearing face (321, 341) of the supporting frame (3).

2. A device according to Claim 1, characterised in that each prismatic bearing (43 or 44) and each associated prismatic housing (312, 332 or 322, 342) comprises eight facets.

3. A device according to either one of the preceding claims, characterised in that each prismatic housing (312, 332 or 322, 342) of the supporting frame (3) consists of two parts (31, 33 or 32, 34) capable of being assembled rigidly together and capable of being disassembled and each forming a half of this housing.

# FIG 1

# FIG 2

0 023 446